# EUROPÄISCHE PATENTSCHRIFT

(11) **EP 1 321 751 B1**
(45) Veröffentlichungstag und Bekanntmachung des Hinweises auf die Patenterteilung: **18.04.2007**
(21) Anmeldenummer: 02026675.5
(22) Anmeldetag: 29.11.2002
(51) Int. Cl.: G01K 7/20, G01K 7/24, H05B 1/02

(54) **Verfahren und Schaltungsanordnung zum Bestimmen des elektrischen Widerstandes eines PTC-Heizelementes**
Method and circuit for the determination of the electrical resistance of a PTC-heating element
Méthode et circuit pour la détermination de la résistance électrique d'un élément de chauffage de PTC

(30) Priorität: 18.12.2001 DE 10162254
(43) Veröffentlichungstag der Anmeldung: 25.06.2003
(73) Patentinhaber: Beru AG, 71636 Ludwigsburg (DE)
(72) Erfinder: Paul, Jürgen, 76297 Stutensee-Büchig (DE)
(74) Vertreter: Pohlmann, Eckart

(56) Entgegenhaltungen:
- DE-A- 2 757 334
- DE-A- 3 818 974

## Beschreibung

Die Erfindung betrifft ein Verfahren zum Bestimmen des durch ein PTC-Heizelement fließenden Stromes sowie eine Schaltungsanordnung zur Durchführung dieses Verfahrens.

PTC-Heizelemente werden auf verschiedenen Gebieten für Heizzwecke, beispielsweise für das Vorheizen der Ansaugluft für Dieselmotoren, bei Stabglühkerzen zur Kaltstarthilfe von Dieselmotoren, als elektrische Zuheizung in Fahrzeugheizungen, als Rückspiegelbeheizung für Kraftfahrzeuge, in Haushaltsgeräten usw. verwandt.

Aus der DE 27 57 334 ist bereits eine Schaltungsanordnung für elektrisch betriebene Heiz- oder Wärmegeräte bekannt, bei der die Temperatur mittels eines zum Heizkreis des Heizelementes parallelen Widerstandes mit nachfolgendem Verstärker geregelt wird, ohne dass der tatsächlich durch das Heizelement fließende Strom bestimmt wird.

Aus der DE 38 18 974 ist eine Regel- und Überwachungsschaltung für elektrische Sitzheizungen bekannt, bei der in der Stromzuleitung zum Heizelement eine Schalteranordnung zum kurzzeitigen Unterbrechen der Speisespannung in Form eines Ansteuerschalters vorgesehen ist.

Aus der JP10226076 ist Verfahren und eine Vorrichtung zum Bestimmen der durch ein PTC-Heizelement eines Tintenstrahldruckers abgegebenen Leistung bekannt, wobei das Heizelement getaktet mit Strom versorgt wird, in der Taktpause das Heizelement und ein dazu in Reihe geschalteter Festwiderstand mit bekanntem Widerstandswert mit Strom versorgt werden und der Spannungsabfall am Festwiderstand gemessen wird, wobei aus dem gemessenen Spannungsabfall und der bekannten Versorgungsspannung durch Verhältnisbildung der Widerstandswert des Heizelementes bestimmt wird, und aus dem in dieser Weise bestimmten Widerstandswert des Heizelementes und der bekannten Versorgungsspannung der von dem Heizelement im Einschalttakt abgegebenen Leistung bestimmt wird.

Bei einem PTC-Heizelement kann es notwendig sein, über eine Messung seines elektrischen Widerstandes eine Größe zu gewinnen, über die eine Stromansteuerung oder -regelung des Heizelementes möglich wird, damit beispielsweise ein maximaler mittlerer Laststrom nicht überschritten wird und die Heizleistung begrenzt wird.

Bisher wurde der durch ein PTC-Heizelement hindurchgehende elektrische Strom über einen Leistungshalbleiter mit integrierter Strommessung oder über die Messung des Spannungsabfalls an einem Shunt-Widerstand ermittelt. Beide Verfahren sind jedoch sehr aufwendig und mit hohen Toleranzen behaftet.

Die der Erfindung zugrunde liegende Aufgabe besteht demgegenüber darin, ein Verfahren und eine Schaltungsanordnung der eingangs genannten Art anzugeben, mit denen in einfacher und kostengünstiger Weise der durch das Heizelement fließende Strom ermittelt werden kann.

Diese Aufgabe wird erfindungsgemäß mit einem Verfahren und einer Schaltungsanordnung nach den Patentansprüchen 1 bzw. 2 jeweils gelöst.

Bei dem erfindungsgemäßen Verfahren und der erfindungsgemäßen Schaltungsanordnung werden zyklisch die Eingangsspannung am Heizelement und der Widerstand des PTC-Heizelementes bestimmt und daraus der durch das Heizelement fließende Strom indirekt ermittelt. Hierüber kann bei der Anwendung beispielsweise im Kraftfahrzeug die Bordnetzlast durch Begrenzung des maximalen effektiven Stroms durch die Heizung begrenzt werden, wobei dieser maximale Strom seinerseits in Abhängigkeit von anderen Parametern, z. B. des Fahrzeugzustandes und der Bordnetzspannung verschiedene Werte haben kann.

Besonders bevorzuge Weiterbildungen und Ausgestaltungen der erfindungsgemäßen Schaltungsanordnung sind Gegenstand der Patentansprüche 3 und 4.

Im Folgenden werden anhand der zugehörigen Zeichnungen besonders bevorzugte Ausführungsbeispiele der Erfindung näher beschrieben. Es zeigen
- Fig. 1 das Schaltbild eines ersten Ausführungsbeispiels mit parallelem Messpfad und Messschalter und
- Fig. 2 das Schaltbild eines zweiten Ausführungsbeispiels mit parallelem Messpfad ohne Messschalter.

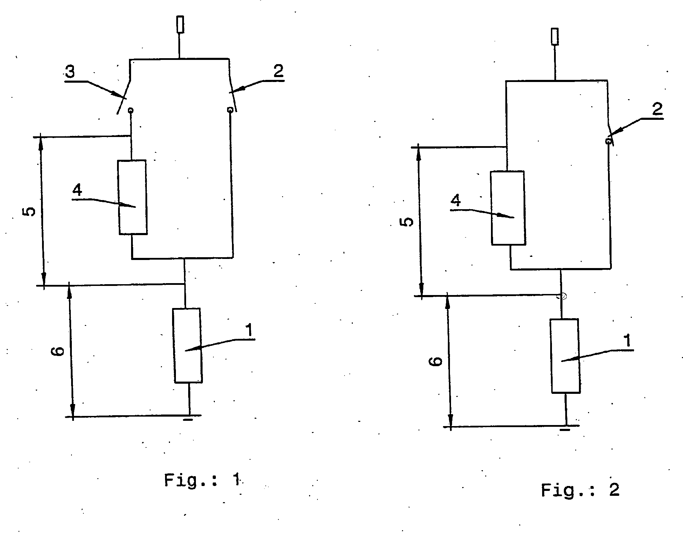

Bei dem in Fig. 1 dargestellten ersten Ausführungsbeispiel der erfindungsgemäßen Schaltungsanordnung ist zum PTC-Heizelement 1 ein bekannter Festwiderstand 4 in Reihe geschaltet. In der Reihenschaltung aus Festwiderstand 4 und PTC-Heizelement 1 liegt ein Schalter 3 und parallel zum Festwiderstand 4 ist ein weiterer Schalter 2 geschaltet. Die Schalter 2 und 3 dienen als Ansteuerungsschalter für den Heizstrom, der durch das PTC-Heizelement 1 fließt, bzw. für den Messstrom, der durch die Reihenschaltung aus dem Festwiderstand 4 und dem PTC-Heizelement 1 fließt.

Vorzugsweise sind die Schalter 2 und 3 aus Leistungshalbleitern gebildet, die durch ein Steuergerät angesteuert werden.

Bei der oben beschriebenen Schaltungsanordnung verhalten sich die elektrischen Widerstände des Festwiderstandes 4 und des PTC-Heizelementes 1 so zueinander wie die über dem Festwiderstand 4 und über dem PTC-Heizelement 1 gemessenen Spannungen 5 und 6. Es versteht sich, dass statt der über dem Festwiderstand 4 auftretenden Spannung auch die über der Reihenschaltung aus dem Festwiderstand 4 und dem PTC-Heizelement 1 auftretende Gesamtspannung gegen Masse, das heißt die Spannung 5 plus 6, gemessen werden kann.

Bei der oben beschriebenen Schaltungsanordnung werden zur Bestimmung des elektrischen Widerstandes des PTC-Heizelementes 1 zwei Spannungsmessungen der Spannungen 5 und 6, bzw. 5 plus 6 durchgeführt und wird der elektrische Widerstand über eine entsprechende Verhältnisbildung mit hoher Genauigkeit erzielt. Aus dem in dieser Weise bestimmten Widerstand und der Eingangsspannung kann der durch das PTC-Heizelement 1 fließende Heizstrom bestimmt werden.

Die Bestimmung des Widerstandes des PTC-Heizelementes 1 kann bei getakteter Ansteuerung in der Taktpause des Heizstromes erfolgen, in der der Schalter 2 geöffnet ist, indem der Schalter 3 kurzzeitig geschlossen und dann eine entsprechende Spannungsmessung vorgenommen wird. Die über dem PTC-Heizelement 1 auftretende Spannung wird während des Ansteuertaktes gemessen, bei dem der Schalter 2 geschlossen und der Schalter 3 geöffnet ist.

Bei dem in Fig. 2 dargestellten zweiten Ausführungsbeispiel fehlt der Schalter 3 in der Reihenschaltung aus dem Festwiderstand 4 und dem PTC-Heizelement 1. Auf diesen Schalter 3 kann dann verzichtet werden, wenn der Strom über diesen Schaltungszweig vernachlässigbar klein ist und/oder eine weitere Abschaltvorrichtung des Heizsystems, beispielsweise über die nicht dargestellte Motorzündung mittels eines Zündschlüssels vorgesehen ist.

Wie es im Obigen im Einzelnen beschrieben wurde, ist es mittels des erfindungsgemäßen Verfahrens und der erfindungsgemä-ßen Schaltungsanordnung möglich, den elektrischen Widerstand eines PTC-Heizelementes in einfacher, kostengünstiger und mit geringen Toleranzen behafteter Weise zu bestimmen, um dadurch beispielsweise den geführten Laststrom in den Einschaltzeiten indirekt zu bestimmen. Gegenüber den bisher üblichen Verfahren der Widerstands- und Strombestimmung ist es dadurch möglich, einen einfachen Halbleiterschalter anstelle eines Halbleiterschalters mit integrierter Strommessung zu verwenden und wird keine Konstantstromquelle benötigt.

## Patentansprüche

1. Verfahren zum Bestimmen des elektrischen Stromes, der durch ein PTC-Heizelement (1) einer Heizeinrichtung eines Kraftfahrzeuges fließt, bei dem
- das Heizelement (1) getaktet mit Strom versorgt wird,
- im Einschalttakt, d.h., bei bestromten Heizelement (1) die Eingangsspannung gemessen wird, die am Heizelement (1) liegt,
- in der Taktpause das Heizelement (1) und ein dazu in Reihe geschalteter Festwiderstand (4) mit bekanntem Widerstand mit Strom versorgt werden und die Spannungsabfälle einerseits am Heizelement (1) und andererseits am Festwiderstand (4) oder an der Reihenschaltung aus Heizelement (1) und Festwiderstand (4) gemessen werden,
- aus den gemessenen Spannungsabfällen durch Verhältnisbildung der Widerstandswert des Heizelementes (1) bestimmt wird, und
- aus dem in dieser Weise bestimmten Widerstandswert des Heizelementes (1) und der im Einschalttakt gemessenen Eingangsspannung am Heizelement (1), der durch das Heizelement (1) im Einschalttakt fließende Strom bestimmt wird.

2. Schaltungsanordnung mit
- einem PTC-Heizelement (1)
- einem bekannten Festwiderstand (4), der in Reihe zum PTC-Heizelement (1) geschaltet ist,
- Spannungsmessabgriffen, die über dem Festwiderstand (4) oder der Reihenschaltung aus dem Festwiderstand (4) und dem PTC-Heizelement (1) sowie über dem PTC-Heizelement (1) selbst vorgesehen sind, und
- einer getakteten Stromversorgung, an der das PTC-Heizelement (1) liegt,
**dadurch gekennzeichnet, dass**
- Mittel zum Bestimmen des elektrischen Widerstandes des PTC-Heizelementes (1) und zum anschließenden Bestimmen des durch das PTC-Heizelement (1) fließenden Stromes gemäß dem Verfahren nach Anspruch 1 vorhanden sind.

3. Schaltungsanordnung nach Anspruch 2, **dadurch gekennzeichnet, dass** die getaktete Stromversorgung einen ersten Ansteuerschalter (2) beinhaltet, der als Ansteuerschalter für den Heizstrom dient und parallel zum Festwiderstand (4) liegt.

4. Schaltungsanordnung nach Anspruch 3, **dadurch gekennzeichnet, dass** in Reihe zur Reihenschaltung des Festwiderstandes (4) und des PTC-Heizelementes (1) ein zweiter Ansteuerschalter (3) für den durch diese Reihenschaltung fließenden Messstrom liegt, wobei die Reihenschaltung aus dem zweiten Ansteuerschalter (3) und aus dem Festwiderstand (4) parallel zum ersten Ansteuerschalter (2) liegt.

## Claims

1. Method for determining the electric current which flows through a PTC heating element (1) of a heating device of a motor vehicle, in which
- the heating element (1) is supplied with current in pulsed mode,
- the input voltage which is applied to the heating element (1) is measured in the on time, i.e. with the heating element (1) energised,
- in the off time the heating element (1) and a fixed resistor (4), which is connected in series with the latter and has a known resistance, are supplied with current and the voltage drops on the one hand at the heating element (1) and on the other at the fixed resistor (4) or at the series connection consisting of the heating element (1) and the fixed resistor (4) are measured,
- the resistance value of the heating element (1) is determined from the measured voltage drops by forming the ratio, and
- the current which flows through the heating element in the on time is determined from the resistance value, thus determined, of the heating element (1) and the input voltage, measured in the on time, at the heating element (1).

2. Circuit arrangement with
- a PTC heating element (1),
- a known fixed resistor (4), which is connected in series with the PTC heating element (1),
- voltage measurement taps, which are provided across the fixed resistor (4) or the series connection consisting of the fixed resistor (4) and the PTC heating element (1) as well as across the actual PTC heating element (1), and
- a pulsed current supply, to which the PTC heating element (1) is applied,
**characterised in that**
- means for determining the electrical resistance of the PTC heating element (1) and for subsequently determining the current which flows through the PTC heating element (1) according to the method according to Claim 1 are provided.

3. Circuit arrangement according to Claim 2, **characterised in that** the pulsed current supply comprises a first selector switch (2), which serves as a selector switch for the heating current and is connected in parallel with the fixed resistor (4).

4. Circuit arrangement according to Claim 3, **characterised in that**, connected in series with the series connection of the fixed resistor (4) and the PTC heating element (1) is a second selector switch (3) for the measuring current which flows through this series connection, wherein the series connection consisting of the second selector switch (3) and of the fixed resistor (4) is connected in parallel with the first selector switch (2).

## Revendications

1. Procédé pour déterminer le courant électrique qui s'écoule à travers un élément chauffant PTC (1) d'un dispositif de chauffage d'un véhicule automobile, dans lequel
- l'élément chauffant (1) est alimenté en courant de manière rythmée,
- pendant la période de marche, c'est-à-dire lorsque l'élément chauffant (1) est parcouru par un courant, la tension d'entrée qui s'applique à l'élément chauffant (1) est mesurée,
- pendant la pause du rythme, l'élément chauffant (1) et une résistance fixe montée en série avec celui-ci de résistance connue sont alimentés en courant et les chutes de tension sont mesurées d'une part sur l'élément chauffant (1) et d'autre part sur la résistance fixe (4) ou sur le circuit série constitué de l'élément chauffant (1) et de la résistance fixe (4),
- à partir des chutes de tension mesurées la valeur de la résistance de l'élément chauffant (1) est déterminée par formation d'un rapport, et
- à partir de la valeur de la résistance de l'élément chauffant (1), déterminée de cette manière, et de la tension d'entrée mesurée pendant la période de marche, sur l'élément chauffant (1), le courant s'écoulant à travers l'élément chauffant (1) pendant la période de marche est déterminé.

2. Circuit comportant
- un élément chauffant PTC (1),
- une résistance fixe (4) connue qui est couplée en série avec l'élément chauffant PTC (1),
- des prises de mesure de tension qui sont prévues au-dessus de la résistance fixe (4) ou du circuit série constitué de la résistance fixe (4) et de l'élément chauffant PTC (1), ainsi qu'au-dessus de l'élément chauffant PTC (1) lui-même, et
- une alimentation rythmée en courant à laquelle est raccordé l'élément chauffant PTC (1),
**caractérisé en ce que**
- des moyens sont prévus pour déterminer la résistance électrique de l'élément chauffant PTC (1) et pour déterminer ensuite le courant s'écoulant à travers l'élément chauffant PTC (1) selon le procédé de la revendication 1.

3. Circuit selon la revendication 2, **caractérisé en ce que** l'alimentation rythmée en courant contient un premier interrupteur de courant (2) qui sert d'interrupteur de courant pour le courant de chauffage et est monté en parallèle à la résistance fixe (4).

4. Circuit selon la revendication 3, **caractérisé en ce qu'**en série avec le circuit série de la résistance fixe (4) et de l'élément chauffant PTC (1), se trouve un second interrupteur de commande (3) pour le courant de mesure s'écoulant à travers ce circuit série, le circuit série constitué du second interrupteur de commande (3) et de la résistance fixe (4) étant en parallèle au premier interrupteur de commande (2).
